# EUROPÄISCHE PATENTANMELDUNG

(11) **EP 2 727 640 A1**
(43) Veröffentlichungstag der Anmeldung: **07.05.2014**
(21) Anmeldenummer: 13191753.6
(22) Anmeldetag: 06.11.2013
(51) Int. Cl.: B01D 46/24

(54) **Partikelfilter**

(30) Priorität: 06.11.2012 DE 102012220181
(71) Anmelder: Fraunhofer-Gesellschaft zur Förderung der angewandten Forschung e.V., 80686 München (DE)
(72) Erfinder: Mammitzsch, Lars, 09113 Chemnitz (DE); Petasch, Uwe, 01520 Panschwitz-Kuckau (DE); Adler, Jörg, 01662 Meißen (DE)
(74) Vertreter: Rauschenbach, Marion

(57) **Zusammenfassung**

Die Erfindung bezieht sich auf das Gebiet der Keramik und betrifft einen Partikelfilter, wie er zur Filtration von Abgasen zum Einsatz kommen kann.

Die Aufgabe der vorliegenden Erfindung besteht in der Angabe eines Partikelfilters, welcher einen kontinuierlichen Druckanstieg und eine hohe mechanische Stabilität aufweist.

Die Aufgabe wird gelöst durch einen Partikelfilter, bestehend aus einem porösen Material, bei welchem die Poren auf der Anströmseite des Filters im Inneren Partikel aufweisen, die die Poren vollständig mindestens über ihren Querschnitt füllen und durch diese poröse Füllung das Porenvolumen der gefüllten Poren 50 bis 90 % bezogen auf das Porenvolumen ungefüllter Poren beträgt, wobei das Porenvolumen der gefüllten Poren an der Anströmseite des Filters geringer ist als das Porenvolumen der gefüllten Poren in Durchströmungsrichtung weiter entfernt von der Anströmseite des Filters und das Porenvolumen der gefüllten Poren in Durchströmungsrichtung weiter zunimmt, je weiter entfernt die Poren von der Anströmseite des Filters sind.

## Beschreibung

Die Erfindung bezieht sich auf die Gebiete der Keramik und des Maschinenbaus und betrifft einen Partikelfilter, wie er beispielsweise zur Filtration von Abgasen, insbesondere von Verbrennungskraftmaschinen zum Einsatz kommen kann. Partikelfilter sind für zahlreiche Anwendungen bekannt, wie beispielsweise als Dieselrußpartikelfilter, als Entstaubungsfilter, als Atemschutzfilter oder als Raumluftfilter. Filter zur Entfernung von Partikeln aus dem Abgas von Verbrennungskraftmaschinen, insbesondere von Dieselmotoren (sog. Dieselrußpartikelfilter) oder von direkt einspritzenden Ottomotoren, sind in verschiedenen Ausführungen bekannt. Als Filterprinzip wird überwiegend die sogenannte Wall-flow-Filtration angewandt, bei der das gesamte Abgas durch dünne Wände (150 µm bis 2 mm) aus einem porösen, zumeist keramischen Material geleitet wird und die im Abgas enthaltenen Partikel an der Oberfläche und im Inneren der Wände aus dem porösen Filtermaterials abgeschieden und dort abgereinigt werden. Die Partikelgröße der im Abgas enthaltenen Partikel beträgt in der Regel zwischen 50 und 200 nm.

Die Funktionsweise solcher Partikelfilter ist derart, dass die im Abgas enthaltenen Partikel hauptsächlich an der Oberfläche der porösen Filterwand hängen bleiben oder mittels Tiefenfiltration im Inneren der Filterwand in kleinen und kleinsten Porenkanälen verbleiben. Die poröse Filterwand enthält in der Regel hauptsächlich Poren, die miteinander verbunden sind (sog. offene Porosität) und dadurch durchgehende Porenkanäle ausbilden, die vom Abgas durchströmt werden können. Üblicherweise sind die Poren aber gleichmäßig in der Filterwand aus dem porösen Material verteilt, so dass keine lokalen Unterschiede im Porenvolumen auftreten.

Ein weiterer wichtiger Parameter zur Charakterisierung eines Filtermaterials, welches die poröse Wand bildet, ist das Porenvolumen, also die Menge an Poren bezogen auf das Volumen des Materials. Übliche Filter für die Reinigung von Abgasen aus Verbrennungskraftmaschinen weisen ein Porenvolumen von 35-80%, typischerweise von 40-60% auf. Gemessen wird das Porenvolumen mit verschiedenen Methoden; zum einen durch das Quecksilberintrusionsverfahren, durch übliche Dichtebestimmung oder mittels Auswertung von Gefügebildern. Beim letzteren Verfahren werden Proben entnommen, diese mit den üblichen metallographischen und keramographischen Verfahren zu Anschliffen präpariert, mit denen mittels Auflichtmikroskopie oder Rasterelektronenmikroskopie Gefügebilder erzeugt werden. Bei diesen Gefügebildern kann in der Regel leicht zwischen Poren und Material unterschieden werden und mittels Bildauswerteverfahren der Anteil der Poren im Verhältnis zum Material quantitativ sehr genau bestimmt werden. Der Vorteil dieses Verfahrens liegt darin, dass hierbei auch lokale Unterschiede im Porenvolumen analysiert werden können, während die Intrusionsverfahren lediglich integrale Summenwerte liefern.

Bei allen Partikelfiltern findet zu Beginn der Filtration eine Tiefenfiltration statt, wenn die im Abgas enthaltenen Partikel kleiner sind als die Porengröße der porösen Filterwand. Dabei wandern die im Abgas enthaltenen Partikel in die Porenkanäle der porösen Filterwand und lagern sich dort in den Poren ab. Jedoch erfolgt gleichzeitig das Ablagern von Partikel auf der Oberfläche der angeströmten Filterwand als sogenannter Filterkuchen, wodurch die Porenkanäle verschlossen und eine Tiefenfiltration behindert oder verhindert wird. Danach tritt fast ausschließlich eine Abscheidung der im Abgas enthaltenen Partikel auf dem Filterkuchen auf (Oberflächenfiltration). Auf diese Weise können bis zum Zeitpunkt der Regeneration bis zu 200 µm dicke Filterkuchenschichten aus abgeschiedenen Partikeln an der Filteroberfläche, quer zur vorherrschenden Durchströmungsrichtung wachsen. Der physikalisch wirksame Mechanismus zum Anhaften der Partikel an der porösen Filterwand beruht auf der Adhäsion. Die Bewegung der Partikel zur Filterwand kommt hauptsächlich durch den Mechanismus der Diffusion zustande und ist durch die Strömung des Abgases durch den Filter überlagert.

Es ist bekannt, dass die Tiefenfiltrationsphase bei der Abscheidung von Partikeln aus dem Abgas von Verbrennungskraftmaschinen eine geringere Abscheideeffizienz aufweist, als die Oberflächenfiltration durch den Filterkuchen.

Bei der Durchströmung der porösen Filterwände entsteht ein Abgasgegendruck, welcher die Motorleistung verringert und den Kraftstoffverbrauch erhöht. Es ist deshalb ein wichtiges Ziel, einen möglichst niedrigen Abgasgegendruck bei ausreichender Abreinigungsleistung (Filtereffizienz) zu erreichen. Dabei erzeugt die unbeladene poröse Filterwand bereits einen Ausgangs-Abgasgegendruck. Im Wesentlichen wird dieser Ausgangs-Abgasgegendruck von der Poren(kanal)größe, dem Porenvolumen und der Dicke der porösen Filterwand bestimmt. Durch die allmähliche Ablagerung der im Abgas enthaltenen Partikel an der Oberfläche und im Inneren der Filterwand steigt der Abgasgegendruck an. Typischerweise wird dieses Verhalten durch die Messung des Abgasgegendruckes (Differenzdruckmessung) bei konstantem Abgasvolumenstrom und Partikelkonzentration im Abgas über der Zeit oder über der abgeschiedenen Partikelmasse pro Filterfläche (oder Filtervolumen) beschrieben. Als Filtereffizienz wird das Verhältnis der masse- oder anzahlbezogenen Partikelkonzentration im Abgas vor und nach Filter bezeichnet.

Dabei ist auch bekannt, dass mit Beginn der Filtration der Abgasgegendruck durch die Tiefenfiltration besonders stark ansteigt. Nach einer vergleichsweise kurzen Filtrationszeit wird mit Ausbildung des Filterkuchens die Oberflächenfiltration dominierend, die nur noch zu einem geringeren Anstieg des Abgasgegendruckes mit der Zeit führt.

Bei Erreichen eines bestimmten Schwellwertes des Abgasgegendruckes wird die Regeneration des Filters eingeleitet, bei der durch Temperaturerhöhung des Abgases, durch einen Brenner oder durch elektrisch Beheizung die Zündtemperatur der abgeschiedenen brennbaren Partikel erreicht wird, oder es kommt durch die Abgastemperatur zu einer spontanen Abreinigung. Nach der Reinigung des Filters beginnt ein neuer Beladungszyklus.

Zur Erniedrigung der Zündtemperatur der Partikel werden Katalysatoren eingesetzt. Zum einen werden diese dem Kraftstoff zugesetzt, so dass sie sich gemeinsam mit den Partikeln am Filter absetzen, allerdings auch die Menge an nichtverbranntem Rückstand, der Asche, nach der Regeneration erhöhen. Zum anderen werden die Filtermaterialien katalytisch oder mit Adsorbentien beschichtet. Dadurch besteht auch die Möglichkeit, im Abgas enthaltende gasförmige Schadstoffe zu beseitigen, z.B. mittels Oxidationskatalysatoren und mittels sogenannter DeNOx-Katalysatoren.

Die Filterwände selbst können aus unterschiedlichen porösen Werkstoffen bestehen, die meist aus Fasern oder Pulver aufgebaut sind. Die Fasern oder das Pulver selbst bestehen aus Keramiken oder aus Metallen. Klassische Keramiken sind Mullit, Cordierit, Siliziumcarbid (SiC) und Aluminiumtitanat. Weitere bekannte Keramiken für die Partikelfiltration sind Siliciumnitrid, Aluminiumnitrid, Aluminiumoxid, Titanoxid, Silicium-Siliciumcarbid. Teilweise werden in neueren Entwicklungen auch unterschiedliche Werkstoffe kombiniert.

Durch die starke Exothermie beim Verbrennen der Partikel können im Filtermaterial sehr hohe Temperaturen auftreten, die das Filtermaterial zerstören. Es ist daher wichtig, den Filter schon vor Erreichen einer kritischen Menge an abgeschiedenen Partikeln zu reinigen und diesen kritischen Punkt sicher in allen Betriebsbereichen der Filteranlage zu erkennen. Aus den o.g. Zusammenhängen von Partikelabscheidung und Gegendruckanstieg könnte mittels des einfach messbaren Abgasgegendruckes auf die im Filter abgeschiedene Partikelmenge geschlossen werden. Allerdings ist dieser eindeutige Zusammenhang nicht gegeben, da bei der Regeneration eine sog. Druckverlusthysterese auftreten kann. Es kommt z.B. häufig vor, dass zuerst die Partikel im Inneren der porösen Wand, die aus der Tiefenfiltration stammen, verbrennen. Dadurch tritt zunächst eine starke Abgasgegendruckverringerung auf, gefolgt von einer allmählichen Verringerung durch Abbrand der Filterkuchenschicht. Das heißt, die Gegendruckkurve als Funktion der Partikelmenge weist zwischen Beladung und Regeneration eine Hysterese auf.

Ein Problem besteht dabei, dass nicht alle Regenerationszyklen zu einem vollständigen Abbrand der abgeschiedenen Partikel führen und bei einer abgebrochenen Regeneration die Partikel in der Filterkuchenschicht auf dem Filter verbleiben. Bei einer neuen Beladung tritt dann keine Tiefenfiltration auf, da noch ein Restfilterkuchen vorhanden ist, auf dem sich die im Abgas enthaltenen Partikel abscheiden. Damit ist der Gegendruck nun insgesamt geringer und täuscht eine geringere Partikelmenge vor, als tatsächlich vorhanden ist. Dadurch kann der Filter nunmehr bis zum Erreichen des Gegendruck-Schwellwertes überladen werden, was zur Zerstörung bei der Regeneration führen kann.

Typischerweise ist ein Partikelfilter für die Reinigung von Abgasen aus Verbrennungskraftmaschinen als sogenannter Honeycomb ausgeführt, der aus einer parallelen Aneinanderreihung von im Querschnitt drei-, vier- oder sechseckigen (vorzugsweise viereckigen) länglichen Hohlräumen bestehen, die von den porösen Filterwänden begrenzt sind. Die länglichen Hohlräume werden an ihren Endseiten wechselseitig verschlossen, so dass das Abgas in die anströmseitig offenen Hohlräume einströmt, durch die porösen Filterwände geführt und gereinigt wird und anschließend durch die abströmseitig offenen Hohlräume abströmt (US 4 329 162 B). Aus der EP 1 403 231 A1 ist ein Filtermaterial bekannt, welches feine Poren in der Filterwand aufweist, die mit großen Poren durchsetzt sind, wobei sich ein Teil der großen Poren an der Oberfläche des Filtermaterials befindet. Dadurch soll quasi die Filtrationsfläche für die abzuscheidenden Partikel vergrößert werden, wodurch der Druckverlust verringert wird, ohne die Abscheideeffizienz zu verringern.

Zur Verringerung des Abgasgegendruckes werden auch sogenannte Membranen oder asymmetrische Filter beschreiben, die aus einem grobporösen Trägermaterial, dem Support, und aus einer dünnen Schicht aus feinporösem Material, der Membran, bestehen, welche die eigentliche Filteraufgabe übernimmt.

In JP 0005146617 ist ein Honeycomb-Filter aus poröser Siliciumcarbidkeramik beschrieben, dessen Kanäle auf der Abströmseite mit einer Membran mit einer geringeren Porengröße beschichtet sind. Hier führt aber eine Verringerung der Porengröße bei gleich bleibendem Porenvolumen zu einer starken Erhöhung des Gegendruckes, da die Tiefenfiltrationsphase nicht vermieden wird. Wenn die Trägerkeramik grobporöser hergestellt wird, leidet die mechanische Festigkeit des Honeycombs.
DE 103 43 438 B4 gibt einen keramischen Partikelfilter aus porösem SiC an, bei dem die Oberfläche des Filters aus einem starren Netzwerk aus SiC-Partikeln mit einem Porenvolumen von 60-95% besteht, das auf ein poröses SiC mit einem Porenvolumen von 20 bis 60 %, vorzugsweise an der Anströmseite, aufgebracht ist. Als Vorteil wird dabei genannt, dass mehr Porenvolumen für die Einlagerung von abgeschiedenen Partikeln möglich ist, bzw. katalytisch wirkende Partikel aufgebracht werden können, ohne den Ausgangsgegendruck zu stark zu erhöhen.
WO 00/01463 gibt u.a. ebenfalls eine keramische Membran an der Abströmseite von SiC-Honeycombs an, die durch die Abscheidung von keramischen Partikeln oder keramischen Fasern gebildet wird, wobei die Membran eine geringere Porengröße besitzen soll, als das Material, aus dem die Honeycomb-Wände bestehen. Das ist aber aus den bereits genannten Gründen ungünstig für den Druckverlust.
Gemäß der EP 2 158 956 A1 ist ein weiteres Filtermaterial bekannt, das mindestens auf der Einlassseite mit einer Schicht versehen ist, die feinere Poren und eine höhere Porosität als das Substratmaterial aufweist. Die Schichtstärke beträgt dabei mehr als 0,5 und weniger als 30% der Wandstärke des Substratmaterials; die Peak-Porenweite der Schicht liegt zwischen 0,3 und 20 µm, das Porenvolumen zwischen 60 und 95%.

Als Vorteil wird explizit genannt, dass der starke Gegendruckanstieg bei anfänglicher Beladung infolge Tiefenfiltration nicht auftritt, die Druckverlustkurve als Funktion der Beladung keine Hysterese zwischen Beladung/Regeneration zeigt und der Ausgangsgegendruck des unbeladenen Filters niedrig ist. Außerdem soll der Filter über eine hohe Abscheideeffizienz verfügen.

Nach der EP 2 239 036 B1 ist ein Filter bekannt, bei dem die Wände der Einlasskanäle mit einer Schicht aus feinporigerem Material als dem der Einlasskanäle bedeckt sind, wobei die Schichtstärke ausgehend vom Filtereinlass auf einer kurzen Distanz kontinuierlich von Null auf eine Dicke ansteigt. Diese Ausbildung wird damit begründet, dass sich in den Einlasskanälen starke Wirbel bilden, die zu einer Ablösung der Schicht und einer Beschädigung des Filters führen.

Hierbei wird schon auf ein wesentliches Problem der feinporigen Schichten mit hohem Porenvolumen hingewiesen - deren mechanische Beständigkeit gegen Abrieb und Ablösung vom Substrat, was hier durch einen konischen Einlauf vermieden werden soll. Auch die o.a. EP 2 158 956 A1 weist zwar auf das Problem der Schichtablösung bei anderen Membrananwendungen hin, führt aber nicht explizit aus, wie es in ihrem Fall gelöst ist.

Aus der WO 2010/097638 A1 ist ein auf der Einlassseite mit Washcoatpartikeln aus Übergangsmetallen (z.B. Cu-Beta-Zeolith), beschichteter Filter bekannt, bei dem die mittlere Porengröße des beschichteten Filtersubstrates kleiner ist, als die des Substrates selbst. Dabei werden zwei Fälle ausgeführt, dass entweder 1) (bevorzugt) eine Schicht mit kleineren Poren auf dem gröberporigen Substrat aufgebracht ist, wobei keine Washcoatpartikel in dem Substrat vorhanden sind. Oder dass 2) zusätzlich zur Aufbringung der Schicht, auch eine Beschichtung der Poren des Substratmaterials mit Washcoatpartikeln im Inneren erfolgt, wobei die Beschichtung zu einer Verengung der Porenkanäle des Substrates führt. Dabei entsteht keine bimodale Porengrößenverteilung, sondern eine Verengung der Porengröße des beschichteten Substrates. Die aufgezeigten Abscheidegrade und Druckverlustkurven zeigen, dass die Abscheideleistung zwar verbessert wird, aber der initiale Tiefenfiltereffekt mit seinem relativ starken Druckverlustanstieg nicht verringert wird.

Gemäß der WO 2010/097634 A1 sind allgemein mit Washcoatpartikeln auf der Einlassseite beschichteten Filter für Partikel aus Ottomotoren bekannt, bei denen, wie bei WO 2010/097638 A1, die mittlere Porengröße des beschichteten Filtersubstrates kleiner ist, als die des Substrates selbst. Dabei wird ergänzend zu den beiden o.g. Ausführungsvarianten eine dritte Variante angeführt, bei der der Washcoat substanziell im Inneren des gesamten porösen Substrates verteilt ist, indem die Washcoatpartikel an den Wänden der Porenkanäle des Substrates abgeschieden sind und solcherart diese verengen.

Nachteilig an diesen Lösungen ist allerdings, dass durch die Beladung des gesamten Substrates mit Washcoat der Ausgangsgegendruck gegenüber einem nicht behandelten Substrat deutlich höher ist.

Gemäß DE 35 44 404 A1 ist ein Filter zum Abscheiden von Feststoffteilchen aus gasförmigen oder flüssigen Medien bekannt, bei dem die Oberflächenporen mit Pulverpartikeln aufgefüllt werden, wodurch Poren mit verschieden großer, aber definierter, kleinerer Porenweite entstehen, um die Abreinigbarkeit im Gegendruckverfahren (Rückspülen oder Ausblasen) zu verbessern.

Auch in DE 28 20 057 A1 ist ein metallisches Filterelement aus versinterten Metallpartikeln beschrieben, bei dem die Oberfläche geringere Porengrößen infolge des Einbringens feinerer Metallpartikel in die Poren aufweist, wodurch ebenfalls die Abreinigbarkeit im Gegendruckverfahren verbessert werden soll.

Nachteilig ist auch bei diesen Lösungen, dass durch die feineren Poren der Ausgangsgegendruck deutlich erhöht wird.

Die Aufgabe der vorliegenden Erfindung besteht in der Angabe eines Partikelfilters, welcher einen im Wesentlichen kontinuierlichen Druckanstieg auch zu Filtrationsbeginn und über die gesamte Lebensdauer des Partikelfilters eine hohe mechanische Stabilität aufweist.

Die Aufgabe wird durch die in den Ansprüchen angegebene Erfindung gelöst. Vorteilhafte Ausgestaltungen sind Gegenstand der Unteransprüche.

Ein erfindungsgemäßer Partikelfilter besteht aus einem porösen Material, bei welchem mindestens die Poren auf der Anströmseite des Filters im Inneren Partikel aufweisen, die die Poren vollständig mindestens über ihren Querschnitt im Wesentlichen quer zur Durchströmungsrichtung füllen und durch diese poröse Füllung das Porenvolumen der gefüllten Poren 50-90 % bezogen auf das Porenvolumen ungefüllter Poren beträgt, wobei das Porenvolumen der gefüllten Poren an der Anströmseite des Filters geringer ist als das Porenvolumen der gefüllten Poren in Durchströmungsrichtung weiter entfernt von der Anströmseite des Filters und das Porenvolumen der gefüllten Poren in Durchströmungsrichtung weiter zunimmt, je weiter entfernt die Poren von der Anströmseite des Filters sind.

Vorteilhafterweise beträgt das Porenvolumen der gefüllten Poren 60 bis 85 % bezogen auf das Porenvolumen ungefüllter Poren.

Ebenfalls vorteilhaferweise ist als poröses Material ein keramisches oder metallisches Material vorhanden, wobei noch vorteilhafterweise als poröses keramisches Material Mullit, Cordierit, Siliziumcarbid (SiC) oder Aluminiumtitanat vorhanden sind.

Und auch vorteilhafterweise sind als Partikel, die im Inneren der Poren vorhanden sind, Partikel aus metallischen oder keramischen Materialien und/oder aus stofflich gleichen Materialien, wie das des porösen Material, und/oder aus Materialien, die eine weitere Funktionalität des Filters zusätzlich zu der Filtrationswirkung realisieren, eingesetzt, wobei noch vorteilhafterweise die Partikel eine mittlere Partikelgröße von 0,1 bis 5 µm aufweisen.

Es ist auch vorteilhaft, wenn als Partikel, die im Inneren der Poren vorhanden sind, Partikel mit hoher thermischer und chemischer Stabilität und/oder katalytisch und/oder adsorptiv wirkende Materialien eingesetzt sind, wobei es noch vorteilhafter ist, wenn als Partikel, die im Inneren der Poren vorhanden sind, Partikel aus Mullit, Cordierit, Siliziumcarbid (SiC), Aluminiumtitanat, Aluminiumoxid, Zirkonoxid, Titanoxid, Zeolithen, Erdalkalioxiden/karbonaten oder Mischungen dieser Materialien eingesetzt sind.

Weiterhin ist es vorteilhaft, wenn das poröse Material in Form eines wechselseitig verschlossene Kanäle aufweisenden Honeycombs ausgebildet ist.

Erfindungsgemäß werden die Partikelfilter als Partikelfilter für Dieselmotoren oder Ottomotoren verwendet.

Mit dem erfindungsgemäßen Partikelfilter ist es erstmals möglich, einen im Wesentlichen kontinuierlichen Druckanstieg auch bereits zu Filtrationsbeginn zu erreichen und gleichzeitig über die gesamte Lebensdauer des Partikelfilters eine hohe mechanische Stabilität.

Dies wird erreicht durch eine Partikelfilter, der aus einem porösen Material besteht. Ein solches poröses Material kann ein keramisches oder ein metallisches Material sein, wobei vorteilhafterweise als poröse keramische Materialien Mullit, Cordierit, Siliziumcarbid (SiC) oder Aluminiumtitanat oder Kombinationen dieser Keramiken eingesetzt werden.

Die erfindungsgemäßen Partikelfilter bestehen aus einem porösen Material, welches über das gesamte Materialvolumen Poren aufweist. Diese Poren werden erfindungsgemäß als Poren bezeichnet.

Dabei sind die Poren auf der Anströmseite des Filters von besonderer Bedeutung, da diese der höchsten Belastung an zu filternden Partikeln ausgesetzt sind. Diese Poren werden erfindungsgemäß im Wesentlichen vollständig mit einer Füllung versehen sein.

Die Poren des porösen Materials weisen üblicherweise einen mittleren Porendurchmesser von 8 bis 30 µm, vorzugsweise von 10 bis 15 µm auf.

Erfindungsgemäß sollen nun mindestens die Poren auf der Anströmseite des Filters im Inneren Partikel aufweisen.
Erfindungsgemäß werden die Partikel, mit denen die Poren gefüllt sind, als Partikel bezeichnet. Diese sind keinesfalls die zu filternden Partikel aus dem Abgasstrom.

Dabei müssen die Poren auf der Anströmseite mindestens über ihren Querschnitt senkrecht zur Durchströmungsrichtung vollständig gefüllt sein.
Ebenfalls ist dabei vorteilhaft, wenn die Füllung der Poren möglichst nahe an der Porenöffnung auf der Anströmseite angeordnet ist.

Die Partikel sind in der Pore oder in den Poren möglichst gleichmäßig verteilt. Dadurch werden die Poren nicht beschichtet oder ausgekleidet, sondern mit den Partikeln ausgefüllt.
Die Füllung der Poren mit den Partikeln ist porös unabhängig davon, ob die Poren vollständig oder nur teilweise mit einer Füllung versehen sind.

Diese poröse Füllung der Poren kann über die Tiefe der Poren unterschiedlich dick ausgeführt sein, vorteilhafterweise so dünn wie möglich. In jedem Fall ist aber die poröse Füllung vollständig über den Querschnitt der Poren oder der Poren realisiert, wobei als Querschnitt erfindungsgemäß der geometrische Querschnitt der Pore(n) betrachtet wird, der im Wesentlichen quer zur Durchströmungsrichtung vorhanden ist.
Weiterhin nimmt die Anzahl der Poren, die im Inneren Partikel aufweisen, ausgehend von der Anströmseite des Filters bis in eine Tiefe des Filters ab. Gefüllte Poren sind in einem Bereich des porösen Filters von der Anströmseite aus bis 50 µm, bevorzugt zwischen 1 und 30 µm, angeordnet.

Durch die Füllung der Poren wird das Porenvolumen der gefüllten Poren verringert. Erfindungsgemäß beträgt das Porenvolumen der gefüllten Poren 50-90 %, vorteilhafterweise 60 bis 85 %, des Porenvolumens von ungefüllten Poren. Dadurch unterscheidet sich die Füllung deutlich von mit Partikeln gefüllten Poren nach dem Stand der Technik, da eine Füllung mit gleichkörnigen Partikeln zur Verringerung der Porenweite üblicherweise die Poren soweit füllt, dass das Porenvolumen deutlich unter 50 % liegt, zumeist bei 45 bis 30 %.

Von besonderer Bedeutung ist dabei, dass das Porenvolumen der gefüllten Poren an der Anströmseite des Filters geringer ist als das Porenvolumen der gefüllten Poren in Durchströmungsrichtung weiter entfernt von der Anströmseite des Filters und das Porenvolumen der gefüllten Poren in Durchströmungsrichtung weiter zunimmt, je weiter entfernt die Poren von der Anströmseite des Filters sind. Die Zunahme des Porenvolumens der gefüllten Poren von der Anströmseite in Durchströmungsrichtung wird durch einen Gradienten gekennzeichnet, der in Prozent des Porenvolumens bezogen auf die Dicke des Bereiches mit gefüllten Poren charakterisiert ist. Naturgemäß wird bei einem nur sehr dünnen Bereich von gefüllten Poren ein sehr hoher Gradient und bei einer größeren Tiefe ein geringerer Gradient auftreten. Bei einem Bereich von nur 1 µm an gefüllten Poren ist der Gradient 10 bis 50 % Porenvolumenzunahme pro µm Tiefe, bei einem Bereich von 30 µm an gefüllten Poren ist der Gradient ca. 1 bis 1,5 % Porenvolumenzunahme pro µm Tiefe. Bei dazwischenliegenden Bereichen ist der Gradient dann zwischen 1,5 und 10 % Porenvolumenzunahme pro µm Tiefe. Bei dem Gradienten handelt es sich i.d.R. nicht um lineare Gradienten über die Tiefe, sondern um exponentielle oder polynomisch angenäherte Gradientenfunktionen; der Einfachheit halber wird diese Gradientenfunktion aber mittels eines mittleren Gradienten charakterisiert, der die gesamte Änderung über die Dicke des gefüllten Bereiches beschreibt.

Je nach Porenvolumen des ungefüllten porösen Materials weist der gesamte gefüllte Bereich des Filters dann ein Porenvolumen von insgesamt 25-60 % auf, bestimmt mittels Bildanalyseverfahren. Auch der Gradient des Porenvolumens in den gefüllten Poren bezogen auf die Tiefe wird durch Bildanalyseverfahren bestimmt, bei dem Schnitte in Anströmrichtung durch das Filtermaterial gelegt werden und das Porenvolumen quantitativ auf Zonen in definiertem Abstand zur Anströmoberfläche bezogen wird. Das Porenvolumen des gesamten gefüllten Bereiches ist dann der Mittelwert aus allen einzeln gemessenen Zonen.

Die genaue Ausprägung der Porenfüllung hinsichtlich der Größe der Partikel, dem Porenvolumen in den gefüllten Poren, der Tiefe der gefüllten Poren in Richtung der Durchströmungsrichtung und deren Auswirkung auf das Abscheide- und Druckverlustverhalten kann für ein spezielles poröses Filtermaterial durch vorhergehende numerische Simulation abgeschätzt und experimentell optimiert werden. Dazu kann z.B. die Simulationssoftware GeoDict der Firma Math2Market GmbH eingesetzt werden. Über einen sogenannten Strukturgenerator wird dabei die genaue Abstimmung der o.g. Materialparameter vorgenommen und mit realen Bildanalysedaten abgestimmt. Danach kann die Abscheidung der Partikel aus einer Gasdurchströmung berechnet werden und daraus das Filtrationsverhalten hinsichtlich Abscheideeffizient und Druckverlust (s. L. Cheng, S. Rief, A. Wiegmann, J. Adler, L. Mammitzsch, U. Petasch, Simulation of soot filtration on the nano-, micro and meso-scale; Proceedings of 11th WORLD Filtration Congress April 2012).

Die Zusammensetzung der Partikel kann das gesamte Spektrum an Materialien umfassen, die für den Anwendungszweck der Partikelfiltration geeignet sind, d.h. über ausreichend hohe thermische und chemische Stabilität verfügen. Daher kann es sich vorzugsweise um metallische und/oder keramische Stoffe handeln. Vorzugsweise wird ein stofflich gleiches Material wie das des porösen Materials verwendet, z.B. Siliciumcarbid, Aluminiumtitanat, Cordierit oder Fe-Cr-Al-Legierungen. Weiterhin ist es aber auch möglich, durch eine andere Zusammensetzung eine zusätzliche Funktionalität zusätzlich zu der Filtrationswirkung zu erreichen; z.B. durch die Verwendung katalytisch und/oder adsorptiv wirkender Stoffe, wie Aluminiumoxid, Zirkonoxid, Titanoxid, Zeolithe, Erdalkalioxide, Erdalkalikarbonate oder Mischungen dieser Materialien.

Dabei weisen diese Partikel eine mittlere Partikelgröße von 0,1 bis 5 µm auf, wobei sich die Größe der Partikel nach der mittleren Porengröße des porösen Materials richtet. Die mittlere Partikelgröße soll deutlich geringer als die mittlere Porengröße des porösen Materials (z.B. bestimmt mittels Quecksilberintrusionsverfahren) sein, d.h. mindestens um den Faktor 5, besser >= 10. Weiterhin ist es vorteilhaft, wenn die Partikelgrößenverteilung möglichst eng ist, d.h. nur eine geringe Abweichung bezüglich Ober- und Unterkorn aufweist.

Der wesentliche Vorteil des erfindungsgemäßen Partikelfilters besteht darin, dass neben einem im Wesentlichen kontinuierlichen Druckanstieg bei Beladung mit zu filternden Partikeln bereits zu Filtrationsbeginn eine hohe mechanische Stabilität über die gesamte Lebensdauer des Partikelfilters erreicht wird.

Zusätzlich weist der erfindungsgemäße Partikelfilter noch die Vorteile auf, dass
- ein relativ niedriger Ausgangsgegendruck des unbeladenen Filters erreichbar ist,
- ein starker Gegendruckanstieg bei anfänglicher Beladung infolge Tiefenfiltration nicht auftritt,
- die Druckverlustkurve als Funktion der Beladung keine Hysterese zwischen Beladung/Regeneration zeigt,
- der Filter über eine hohe Abscheideeffizienz verfügt, und dass
- die mechanische Stabilität höher ist, als bei den Lösungen mit aufgebrachter Membran.

Ein weiterer Vorteil gegenüber den Lösungen des Standes der Technik besteht darin, dass keine Schicht aus einem zweiten Material aufgebracht werden muss, so dass nicht die Gefahr einer Ablösung oder mechanischen Beschädigung besteht.

Überraschenderweise wurde durch die erfindungsgemäße Lösung gefunden, dass die Füllung der Poren den Ausgangsgegendruck des porösen Materials nur sehr unwesentlich erhöht, was leicht durch eine Verringerung der Dicke der Filterwandung des porösen Materials und/oder die Auswahl eines Materials mit einer etwas höheren Porengröße ausgeglichen werden kann. Infolge der Füllung der Poren werden offensichtlich die mit dem Abgasstrom mitgeführten Partikel aus dem Abgas von Verbrennungskraftmaschinen unmittelbar an der Oberfläche abgeschieden, d.h. die Tiefenfiltration wird, ebenso wie die Beladungs/Regenerationshysterese, vollständig vermieden, und eine hohe Abscheideeffizienz wird erreicht.

Die Füllung der Poren kann mit verschiedenen technischen Mitteln erreicht werden. Zum einen können feine Partikel mittels einer Suspension in das poröse Material eingeschlämmt werden. Dabei wird die Suspension durch die Kapillarwirkung des porösen Materials in die Oberfläche eingesogen, wodurch die Partikel der Suspension in den Poren des porösen Materials abgelagert werden. Durch an sich bekannte experimentelle Abstimmungen der Suspensionsparameter (Partikelgröße, Feststoffgehalt, Viskosität) und der Verweilzeit können die Herstellungsparameter leicht ermittelt werden, die die erfindungsgemäße Füllung der Poren und einen Porenvolumengradienten über die Tiefe des porösen Materials erreichen. Zur besseren Steuerung des Prozesses kann die Suspension auch unter Überdruck durch das poröse Material gedrückt werden, oder durch Anlegen eines Unterdruckes auf der Rückseite des porösen Materials, wodurch die Suspension durch das Material gesaugt wird.

Selbstverständlich muss eine schichtweise Abscheidung der Partikel auf der Oberfläche des porösen Materials vermieden werden, was durch die Wahl der Suspensionsparameter ebenfalls in bekannter Art und Weise realisiert werden kann. Überschüssige Suspension wird nach einer festgelegten Einwirkzeit entfernt und gegebenenfalls wird die Oberfläche mit einer Flüssigkeit gesäubert und anschließend das Material getrocknet.

Eine andere Möglichkeit zur Abscheidung von Partikeln zur Füllung der Poren besteht in der Verwendung eines partikelbeladenen Gasstromes (Aerosolstrom), der durch Verdüsung einer Suspension (d.h. zusammen mit Flüssigkeitströpfchen) oder durch Verdüsung trockener Partikel, z.B. mithilfe eines Aerosolgenerators, erzeugt wird. Der Gasstrom wird durch das poröse Material geleitet, wodurch eine Abscheidung der im Gasstrom mitgeführten Partikel in den Poren des porösen Materials erfolgt. Durch an sich bekannte experimentelle Abstimmungen der Aerosolparameter (Partikelgröße, Partikelkonzentration, Gasvolumenstrom) und der Einwirkzeit können die Herstellungsparameter leicht ermittelt werden, die die erfindungsgemäße Füllung der Poren erreicht. Zur besseren Steuerung des Prozesses kann der Aerosol-Gasdruck genutzt werden, mit dem das Aerosol durch das poröse Material gedrückt wird, oder durch Anlegen eines Unterdruckes auf der Rückseite des porösen Materials, wodurch das Aerosol durch das Material gesaugt wird. Selbstverständlich muss auch hier eine schichtweise Abscheidung der Partikel auf der Oberfläche des porösen Materials vermieden werden, was durch die Wahl der Aerosolparameter ebenfalls in bekannter Art und Weise realisiert werden kann. Überschüssige Partikel werden nach einer festgelegten Einwirkzeit entfernt und gegebenenfalls wird die Oberfläche mit einer Flüssigkeit gesäubert.

Nach dem Einbringen der Partikel kann sich ein Wärmebehandlungsschritt anschließen, wodurch die Partikel durch Kontaktstellenversinterung der Partikel untereinander und/oder mit dem umgebenden Material in den Poren fixiert werden können.

Es ist aber auch möglich, die Partikel mit üblichen Bindern zu mischen und diese gemeinsam mit den Partikeln in dem porösen Material abzuscheiden, so dass z.B. durch Aushärten des Binders oder eine Versinterung mit dem Binder eine Verfestigung der Partikel untereinander und/oder mit dem umgebenden Material erfolgt. Weiterhin ist es möglich, Partikel verschiedener Zusammensetzung zu verwenden, die bei der Wärmebehandlung miteinander zu Partikeln aus neuen Verbindungen reagieren und dadurch die Füllung der Poren des porösen Materials mit Partikeln erzeugen.

Die Größe der eingesetzen Partikel richtet sich nach der mittleren Porengröße des porösen Materials. Die mittlere Partikelgröße (z.B. bestimmt über Laserbeugung) eines verwendeten Pulvers sollte deutlich geringer als die mittlere Porengröße des porösen Materials (z.B. bestimmt mittels Quecksilberintrusionsverfahren) sein, d.h. mindestens um den Faktor 5, besser >= 10. Weiterhin sollte die Partikelgrößenverteilung möglichst eng sein, d.h. nur eine geringe Abweichung bzgl. Ober- und Unterkorn aufweisen. Wenn der Anteil sehr grober Partikel hoch ist, die die Porengröße des porösen Materials übersteigt, kann die Ausbildung einer Schicht aus den groben Partikeln an der Oberfläche des porösen Materials nicht vermieden werden. Daher sollte der Überkornanteil, gemessen als d95-Wert der Partikelgrößenverteilung immer kleiner als die mittlere Porengrößenverteilung des porösen Materials sein, besser noch um den Faktor 2 kleiner.

Bei der Auswahl der eingesetzten Partikelgröße ist gegebenenfalls auch zu berücksichtigen, dass es während einer Wärmebehandlung infolge von Kornwachstum, Reaktionen oder Schwindungsvorgängen zu einer Veränderung der Partikelgröße und des Porenvolumens zwischen den Partikeln kommen kann. Diese Effekte können in Vorversuchen leicht untersucht und bei der Auswahl der Partikel berücksichtigt werden, um das erfindungsgemäße Ergebnis zu erreichen.

Weiterhin ist es möglich, gemeinsam mit den Partikeln sogenannte partikuläre Ausbrennstoffe als sog. Platzhalter in den Poren des porösen Materials abzuscheiden. Diese werden durch die Wärmebehandlung thermisch entfernt und hinterlassen ein höheres Porenvolumen zwischen den Partikeln. Durch Auswahl der Partikelgröße und der Konzentration der Ausbrennstoffe lässt sich die genaue Höhe des Porenvolumens einstellen.

Nachfolgend wird die Erfindung an zwei Ausführungsbeispielen näher erläutert.

### Beispiel 1

15 g SiC Pulver (α-SiC, mittlerer Korndurchmesser 1,2 µm) wurden durch Einrühren in 100 ml destilliertes Wasser zu einer wässrigen Suspension verarbeitet. In einen wechselseitig gepluggten Honeycomb-Filter mit Wandungen aus porösem rekristallisiertem SiC (14/200 entsprechend 200 cpsi bei 0,014 inch Wandstärke, d.h. etwa 31 Zellen/cm² bei 0,35 mm Wandstärke, quadratischer Kanalquerschnitt, Porenvolumen 52 %, mittlere Porenweite 15 µm) der Größe 35 mm x 35 mm x 152 mm wurde die Suspension an der Stirnseite der Anströmseite in die Anströmkanäle des Honeycombs eingegossen. Nach 10 s wurde die Suspension aus den Kanälen ausgegossen und vorsichtig ausgeschüttelt und der Filter bei 150 °C unter Luft getrocknet.
Zur Stabilisierung und Versinterung der eingebrachten SiC Partikel wurde der Filter anschließend thermisch bei 2000 °C unter Argon behandelt.

Zur Bestimmung der Porengröße und Porosität wurden Schnitte durch die Filterwandung keramographisch präpariert und rasterelektronenmikroskopische Aufnahmen (REM Bilder) aufgenommen. An den erzeugten REM Bilder wurde mittels graphischer Bildauswertung (Erzeugung von Schwarz-Weiß-Bilder, Segmentierung der Poren, Ermittlung von Äquivalenzdurchmessern) Porenweite und Porosität bestimmt. Dabei zeigt sich, dass von der Anströmseite ausgehend die Poren der Filterwandung bis zu einer Tiefe von ca. 20 µm mit SiC-Partikeln einer Größe von ca. 1,4 µm gefüllt sind. An der Oberfläche der Filterwandung zur Anströmseite ist keine durchgängige Schicht aus den feinen Partikeln vorhanden. Die ca. 20 µm dicke Zone auf der Anströmseite der Filterwände weist nun ein Gesamtporenvolumen von ca. 31 % auf, d.h. die Porosität ist um ca. 40% verringert, im Vergleich zu dem unbehandelten Filtermaterial. Die poröse Füllung der Poren des Filtermaterials weist ein Porenvolumen von insgesamt 60 % auf. Die mittlere Porengröße der porösen Füllung beträgt ca. 0,7 µm. Von der Oberfläche der Filterwandung bis zu einer Tiefe von ca. 5 µm weist die poröse Füllung ein Porenvolumen von 53 % auf, von 5-10 µm Tiefe von ca. 55 %, von 10-15 µm Tiefe von ca. 60 % und von 15-20 µm Tiefe ca. 70 %., entsprechend einem durchschnittlichen Gradienten von 3 % pro µm Tiefe.

Die Bestimmung des Gegendruckes und der Abscheideeffizienz (nach Partikelanzahl) erfolgt, indem ein mit synthetischen Rußpartikeln versetzter Luftstrom von 200 l/min den behandelten Filter durchströmt.

Zum Vergleich wurde auf die gleiche Art und Weise der Gegendruck und die Abscheideeffizienz an einem unbehandelten Filter (Referenzfilter) mit Wandungen aus rekristallisiertem SiC (14/200 entsprechend 200 cpsi bei 0,014 inch Wandstärke, d.h. etwa 31 Zellen/cm² bei 0,35 mm Wandstärke, quadratischer Kanalquerschnitt, Porenvolumen 52 %, mittlere Porenweite 15 µm) der Größe 35 mm x 35 mm x 152 mm bestimmt. Die Ergebnisse der Untersuchungen sind in Tabelle 1 zusammengestellt, wobei der Ausgangsdruckverlust und die anzahlbezogene Abscheideeffizienz an den unbeladenen Filtern, sowie nach einer Beladung von 5 g Ruß pro Liter Filtervolumen gemessen wurde

**Tabelle 1:**

| | AusgangsGegendruck (unbeladen) | Anzahlbezogene Abscheideeffizienz (unbeladen) | Gegendruck bei 5 g/l Beladung | Anzahlbezogene Abscheideeffizienz bei 5 g/l Beladung |
|---|---|---|---|---|
| unbehandelter Filter (Referenz) | 530 Pa | 73,5 % | 1050 Pa | 99,6 % |
| erfindungsgemäß behandelter Filter | 550 Pa | 97,3 % | 850 Pa | 99,9 % |

Der erfindungsgemäße Filter weist einen nahezu gleichen Ausgangsgegendruck wie der Referenzfilter auf, hat aber schon zu Beginn der Filtration eine sehr hohe Abscheideeffizienz. Der typische steile Anstieg des Druckverlustes ist im Gegensatz zum Referenzfilter nicht zu beobachten, und der Gegendruck bei einer höheren Rußbeladung, bei dem bei beiden Filtern eine Kuchenbildung eingesetzt hat, ist deutlich niedriger, als beim Referenzfilter.

### Beispiel 2:

10 g Al2O3 Pulver (gamma-Aluminiumoxid, mittlerer Korndurchmesser 1,0 µm) wurden mit 5 g Böhmit Pulver (mittlerer Korndurchmesser 100 nm) und 10 g Graphitpartikeln (mittlerer Partikeldurchmesser 2 µm) vermengt. Die Pulvermischung wurde über eine Zerstäuberdüse in einen Luftstrom von 200 l/min eingebracht, wobei ein Partikelstrom von 1 mg/s erreicht wurde. Die partikeltragende Luft (Aerosol) wurde durch einen wechselseitig gepluggten Honeycomb-Filter mit Wandungen aus poröser Cordierit -Keramik (12/300 entsprechend 300 cpsi bei 0,012 inch Wandstärke, d.h. etwa 46 Zellen/cm² bei 0,30 mm Wandstärke, quadratischer Kanalquerschnitt, Porenvolumen 60 %, mittlere Porenweite 15 µm) der Größe 35 mm x 35 mm x 152 mm für 15 Minuten gedrückt.
Anschließend wurde der Cordierit Wallflow Filter bei 700°C für 2 h unter Luft kalziniert, wobei die Graphitpartikel verbrannten.

Zur Bestimmung der Porengröße und Porosität wurden Schnitte durch die Filterwandung keramographisch präpariert und rasterelektronenmikroskopische Aufnahmen (REM Bilder) aufgenommen. An den erzeugten REM Bilder wurde mittels graphischer Bildauswertung (Erzeugung von Schwarz-Weiß-Bilder, Segmentierung der Poren, Ermittlung von Äquivalenzdurchmessern) Porenweite und Porosität bestimmt. Dabei zeigt sich, dass von der Anströmseite ausgehend die Poren der Filterwandung bis zu einer Tiefe von 15 µm mit ca. 1 µm großen Partikeln aus Aluminiumoxid gefüllt sind, welche untereinander und mit dem Cordierit durch feine Aluminiumoxidpartikel verbunden sind. An der Oberfläche der Cordierit-Filterwandung zur Anströmseite ist keine durchgängige Schicht aus den feinen Aluminiumoxid-Partikeln vorhanden. Die 15 µm dicke Zone auf der Anströmseite der Filterwände weist nun ein Gesamtporenvolumen von 42 %, d.h. die Porosität ist um 30% verringert, im Vergleich zu dem unbehandelten Filtermaterial. Die poröse Füllung der Poren des Filtermaterials weist ein Porenvolumen von insgesamt 70 % auf. Die Porengröße der porösen Füllung weist hauptsächlich Größen von 0,1 µm und von 3 µm auf. An Querschnitten der Filterwandung in Anströmrichtung weisen die gefüllten Poren in einem Bereich von der Oberfläche bis zu einer Tiefe von ca. 5 µm ein Porenvolumen von ca. 64 %, in einer Tiefe von 5-10 µm von 68 % und in einer Tiefe von 10-15 µm von ca. 80 % auf; was einem mittleren Gradienten von ca. 5 % pro µm Tiefe entspricht.

Die Bestimmung des Gegendruckes und der Abscheideeffizienz (nach Partikelanzahl) erfolgt, indem ein mit synthetischen Rußpartikeln versetzter Luftstrom von 200 l/min den behandelten Filter durchströmt.

Zum Vergleich wurde auf die gleiche Art und Weise der Gegendruck und die Abscheideeffizienz an einem unbehandelten Filter (Referenzfilter) mit Wandungen aus Cordierit (12/300 entsprechend 300 cpsi bei 0,012 inch Wandstärke, d.h. etwa 46 Zellen/cm² bei 0,30 mm Wandstärke, quadratischer Kanalquerschnitt, Porenvolumen 60 %, mittlere Porenweite 15 µm) der Größe 35 mm x 35 mm x 152 mm bestimmt. Die Ergebnisse der Untersuchungen sind in Tabelle 2 zusammengestellt, wobei der Ausgangsdruckverlust und die anzahlbezogene Abscheideeffizienz an den unbeladenen Filtern, sowie nach einer Beladung von 5 g Ruß pro Liter Filtervolumen gemessen wurde.

**Tabelle 2:**

| | AusgangsGegendruck (unbeladen) | Anzahlbezogene Abscheideeffizienz (unbeladen) | Gegendruck bei 5 g/l Beladung | Anzahlbezogene Abscheideeffizienz bei 5 g/l Beladung |
|---|---|---|---|---|
| unbehandelter Filter (Referenz) | 410 Pa | 67,3 % | 800 Pa | 99,8 % |
| erfindungsgemäß behandelter Filter | 420 Pa | 99,6 % | 610 Pa | 100,0 % |

Der erfindungsgemäße Filter weist einen nahezu gleichen Ausgangsgegendruck wie der Referenzfilter auf, hat aber schon zu Beginn der Filtration eine sehr hohe Abscheideeffizienz. Der typische steile Anstieg des Druckverlustes ist im Gegensatz zum Referenzfilter nicht zu beobachten, und der Gegendruck bei einer höheren Rußbeladung, bei dem bei beiden Filtern eine Kuchenbildung eingesetzt hat, ist deutlich niedriger, als beim Referenzfilter.

## Patentansprüche

1. Partikelfilter bestehend aus einem porösen Material, bei welchem mindestens die Poren auf der Anströmseite des Filters im Inneren Partikel aufweisen, die die Poren vollständig mindestens über ihren Querschnitt im Wesentlichen quer zur Durchströmungsrichtung füllen und durch diese poröse Füllung das Porenvolumen der gefüllten Poren 50-90 % bezogen auf das Porenvolumen ungefüllter Poren beträgt, wobei das Porenvolumen der gefüllten Poren an der Anströmseite des Filters geringer ist als das Porenvolumen der gefüllten Poren in Durchströmungsrichtung weiter entfernt von der Anströmseite des Filters und das Porenvolumen der gefüllten Poren in Durchströmungsrichtung weiter zunimmt, je weiter entfernt die Poren von der Anströmseite des Filters sind.

2. Partikelfilter nach Anspruch 1, bei dem das Porenvolumen der gefüllten Poren 60 bis 85 % bezogen auf das Porenvolumen ungefüllter Poren beträgt.

3. Partikelfilter nach Anspruch 1, bei dem als poröses Material ein keramisches oder metallisches Material vorhanden ist.

4. Partikelfilter nach Anspruch 3, bei dem als poröses keramisches Material Mullit, Cordierit, Siliziumcarbid (SiC) oder Aluminiumtitanat vorhanden sind.

5. Partikelfilter nach Anspruch 1, bei dem als Partikel, die im Inneren der Poren vorhanden sind, Partikel aus metallischen oder keramischen Materialien und/oder aus stofflich gleichen Materialien, wie das des porösen Material, und/oder aus Materialien, die eine weitere Funktionalität des Filters zusätzlich zu der Filtrationswirkung realisieren, eingesetzt sind.

6. Partikelfilter nach Anspruch 5, bei dem als Partikel, die im Inneren der Poren vorhanden sind, Partikel mit hoher thermischer und chemischer Stabilität und/oder katalytisch und/oder adsorptiv wirkende Materialien eingesetzt sind.

7. Partikelfilter nach Anspruch 6, bei dem als Partikel, die im Inneren der Poren vorhanden sind, Partikel aus Mullit, Cordierit, Siliziumcarbid (SiC), Aluminiumtitanat, Aluminiumoxid, Zirkonoxid, Titanoxid, Zeolithen, Erdalkalioxiden/karbonaten oder Mischungen dieser Materialien eingesetzt sind.

8. Partikelfilter nach Anspruch 5, bei dem die Partikel eine mittlere Partikelgröße von 0,1 bis 5 µm aufweisen.

9. Partikelfilter gemäß mindestens einem der Ansprüche 1 bis 8, bei der das poröse Material in Form eines wechselseitig verschlossene Kanäle aufweisenden Honeycombs ausgebildet ist.

10. Verwendung eines Partikelfilters gemäß mindestens einem der Ansprüche 1 bis 9 als Partikelfilter für Dieselmotoren oder Ottomotoren.
